(19)

Europäisches
Patentamt
European
Patent Office
Office européen
des brevets

(11) **EP 2 596 864 A1**

(12) **EUROPEAN PATENT APPLICATION**
published in accordance with Art. 153(4) EPC

(43) Date of publication:
**29.05.2013 Bulletin 2013/22**

(51) Int Cl.:
**B01J 35/02** *(2006.01)*  **B01J 31/38** *(2006.01)*

(21) Application number: **11809589.2**

(22) Date of filing: **13.07.2011**

(86) International application number:
**PCT/JP2011/065937**

(87) International publication number:
**WO 2012/011415 (26.01.2012 Gazette 2012/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.07.2010  JP 2010165880**

(71) Applicant: **Toto Ltd.
Fukuoka 802-8601 (JP)**

(72) Inventors:
• **HAYAKAWA, Makoto
Kitakyushu-shi
Fukuoka 802-8601 (JP)**
• **TERASAKI, Hiroshi
Kitakyushu-shi
Fukuoka 802-8601 (JP)**
• **KAMESHIMA, Junji
Kitakyushu-shi
Fukuoka 802-8601 (JP)**

• **FUJII, Hiroyuki
Kitakyushu-shi
Fukuoka 802-8601 (JP)**
• **OMOSHIKI, Koji
Kitakyushu-shi
Fukuoka 802-8601 (JP)**
• **KITAZAKI, Satoru
Kitakyushu-shi
Fukuoka 802-8601 (JP)**
• **KANNO, Mitsuyoshi
Kitakyushu-shi
Fukuoka 802-8601 (JP)**

(74) Representative: **Grünecker, Kinkeldey,
Stockmair & Schwanhäusser
Leopoldstrasse 4
80802 München (DE)**

(54) **USE OF COMPOSITE MATERIAL EQUIPPED WITH PHOTOCATALYST LAYER**

(57) Disclosed is use of a composite material including a transparent photocatalyst layer that can allow a design of a substrate to be utilized and, at the same time, can exert a photocatalytic decomposition function while effectively suppressing a silicone contamination-derived appearance change over a long period of time. The composite material includes a photocatalyst layer. The photocatalyst layer includes photocatalyst particles and inorganic oxide particles where the total mass of the photocatalyst particles and the inorganic oxide particles is 80% by mass (exclusive) to 100% by mass (inclusive) when the mass of the whole photocatalyst layer is presumed to be 100% by mass. The number mean particle diameter of particulate components constituting the photocatalyst layer is less than 90 nm as calculated by measuring the length of any 100 particles present in a field of view under a scanning electron microscope at a magnification of 200000 times. The photocatalyst layer is transparent and has a thickness of not more than 3 $\mu$m. The photocatalyst is excited by sunlight to decompose substances, thereby reducing or preventing silicone contamination on the surface of the photocatalyst layer.

EP 2 596 864 A1

**Description**

[RELATED APPLICATION]

This application is based upon and claims the benefit of priority from the prior Japanese Patent Application No. 165880/2010, filed on July 23, 2010, the entire contents of which are incorporated herein by reference.

[TECHNICAL FIELD]

The present invention relates to use of a composite material comprising a photocatalyst layer.

[BACKGROUND ART]

Photocatalysts such as titanium oxide have recently become utilized, for example, in constructions of buildings, structures, vehicles, and members and composite materials constituting them.

For utilization of photocatalysts in outdoors, photocatalysts have been deposited on the surface of substrates to impart the function of decomposing harmful substances such as NOx and SOx through the utilization of photoenergy. Further, the surface of the layer that has been rendered hydrophilic during light irradiation has the function of allowing deposited contaminants to be washed away by rainfall, that is, has the so-called self-cleaning function.

For example, in constructions of buildings, structures, vehicles, and members and composite materials constituting them, in many cases, design is imparted for utilization in living spaces. To this end, substrates including an organic material surface, such as resin plates or sheets, wallpapers, coated plates or sheets, film laminated plates or sheets, and decorative plates or sheets, are mainly used as substrates for these members, and these substrates are colored to impart the design. Accordingly, the development of techniques that form a transparent photocatalyst film has been demanded from the viewpoint of maintaining the design imparted to the substrate.

In order to fix a photocatalyst film on a substrate, a technique is adopted in which photocatalyst particles are immobilized with a binder. For example, silicones, silica bound by hydrolysis and condensation of alkyl silicates, and fluororesins are extensively used as the binder component from the viewpoint of resistance to the photocatalytic decomposition function (for example, JP H07(1995)-171408 (PTL1)).

Further, some of the present inventors have recently found that, when a photocatalyst film consisting essentially of a particulate material is formed using silica particles as a binder, fixability can be exerted and, at the same time, the function of decomposing harmful gases such as NOx can be exerted (for example, JP 2008-272718A (PTL 2), JP 2010-996044A (PTL 3), JP 2009-255571A (PTL 4), and JP 2010-5613A (PTL 5)).

On the other hand, in many cases, in the construction of external wall materials, sealing materials are used for filling into joining areas or gaps (generally called joints) between members to impart watertightness and airtightness to the joints. Various sealing materials are available. Among them, silicone sealing materials possessing excellent water resistance, durability, and weathering resistance are in many cases used. The application of an ordinary coating around a place filled with the silicone sealing material poses a problem that low-molecule compounds contained in the silicone sealing material are eluted and disadvantageously cover the surface of the coating film (coating) and, further, contaminants in the air are deposited on the surface, resulting in a significantly deteriorated appearance of the outer wall surface (such contamination will be hereinafter referred to as "silicone contamination").

Silicone sealing materials are roughly classified according to the type of by-produced compounds produced mainly in a curing process into acetic acid type, oxime type, aminoxy type, alcohol type and the like. The basic structures of silicone sealing materials have a siloxane bond (-Si-O-Si-) in their main chain, and a hydroxyl group bonded to Si in a dimethylsilyl group (silanol group) is present in the functional group at the end of the polymer. Therefore, a condensation reaction proceeds while utilizing moisture in the air. Thus, the silicone sealing material contains a water-repellent functional group such as Si-CH$_3$ group in part of the skeleton. When low-molecule compounds of silicone remaining unreacted are gradually eluted and deposited on the surface of the coating film during a curing process after pouring of the silicone sealing material, the surface of the coating film becomes gradually water-repellent. Organic contamination components in the air are accumulated on the water-repellent surface and, consequently, the contamination becomes noticeable.

On the other hand, a technique has been proposed in which a superhydrophilic film containing photocatalyst particles is formed on the surface of the coating film to maintain a self-cleaning function, whereby contaminants are less likely to be deposited on the surface of the coating film (PTL 1). The decomposition power of the photocatalyst cannot decompose the siloxane bond in the skeleton of the substance eluted from the silicone sealing materials, but on the other hand, can decompose Si-CH$_3$ group bonded to the skeleton. When Si-CH$_3$ can be decomposed at a satisfactory speed, Si-CH$_3$ is converted to hydrophilic silanol and, thus, a hydrophilic self-cleaning function can be exerted in principle.

When a silicone oil such as contained in the silicone sealing material stays, the silicone oil is deteriorated by the action of the photocatalyst. Consequently, the deteriorated silicone oil is firmly fixed on the surface of the photocatalyst, and, in some cases, the hydrophilization of the photocatalyst film is inhibited, leading to significantly lowered antifouling properties and easiness on cleaning of the photocatalyst film. The reason for this unfavorable phenomenon is believed to reside in that siloxane is adsorbed on the surface of the photocatalyst film and causes steric hindrance and, consequently, alkyl groups such as a methyl group bonded to silicon on the outermost surface are less likely to be decomposed. In this state, the elution speed of the substance from the silicone sealing material is higher than the decomposition reaction speed, and the catalytic activity is gradually lowered, leading to accumulation of a silicone eluted component on the surface of the coating film. The accumulated silicone oil deteriorated product exhibits water repellency due to the remaining alkyl group. When this substance is fixed on the surface of the photocatalyst film, the hydrophilization of the photocatalyst film is inhibited and, thus, easiness on cleaning by water is significantly lowered. Various contaminants are deposited on the surface of the photocatalyst film having lowered easiness on cleaning and cover the surface of the photocatalyst film and, consequently, the amount of light incident on the photocatalyst film is disadvantageously significantly reduced. Accordingly, the effect of oxidatively decomposing organic materials by the photocatalyst film is lowered, making it impossible to decompose the remaining alkyl group in the silicone oil deteriorated product. Further, the hydrophilization of the photocatalyst film is also inhibited.

Thus, it is not easy to maintain the photocatalytic function under a "silicone contamination" environment over a long period of time. Up to now, however, various proposals have been made (for example, JP 2001-62309A (PTL 6) and JP 2004-225449A (PTL 7)).

JP 2001-62309A (PTL 6) discloses "A photocatalyst film comprising semiconductive fine particles or a material containing semiconductive fine particles, an oxidizing agent or/and an oil repellent agent being added into the photocatalyst film or/and supported on the surface of the photocatalyst film." That is, PTL 6 discloses an idea that, when an oxidizing agent is added into a photocatalyst film comprising semiconductive fine particles or a material containing semiconductive fine particles or/and is supported on the surface of the photocatalyst film, the effect of oxidatively decomposing organic materials is enhanced and the oxidative decomposition speed of the organic materials is rendered higher than the elution speed of the substance from the silicone sealing material. In this technique, however, it is considered that the problem that siloxane is adsorbed on the surface of the photocatalyst film and causes steric hindrance, making it difficult to exert action of the photocatalyst on an object to be decomposed, cannot be satisfactorily solved. Further, PTL 6 discloses an idea that, when an oil repellent agent is added into a photocatalyst film comprising semiconductive fine particles or a material containing semiconductive fine particles or/and is supported on the surface of the photocatalyst film, the capability of the substance eluted from the silicone sealing material to be fixed on the photodcatalyst film is reduced and the oxidative decomposition speed of the organic materials is rendered higher than the elution speed of the substance from the silicone sealing material. In this technique, however, it is considered that, when the photocatalyst film per se is rendered water-repellent or maintains hydrophilicity, the substance eluted from the silicone sealing material has a siloxane skeleton and, thus, disadvantageously, fixation on the photocatalyst film occurs through this portion.

JP 2004-225449A (PTL 7) discloses "An exterior material comprising: a substrate; and a silicone coating layer that is provided on the surface of the substrate, contains a photosemiconductor, has a hydrophilicity of not more than 40° in terms of contact angle to water, and has a porous structure having micropores interconnected to each other in a thickness-wise direction from the surface layer, and has been formed by using an organosiloxane having a molecular weight of not less than 900, a coating film of the silicone coating layer being permeable to organosilicone low-molecule compounds in a thickness-wise direction of the film, the silicone coating layer containing at least one inorganic filler selected from acicular pigments, fibrous pigments, flaky pigments, or porous spherical pigments as a silicone coating composition for the formation of the porous structure, the content of the filler component being in the range of 5 to 50% in terms of volume ratio to the total amount of the silicone resin and the filler in the silicone coating composition." The claimed advantage of the above construction is that "since a silicone coating layer that has a porous structure, is permeable to organosilicone low-molecule compound in a thickness-wise direction of the film, contains a photosemiconductor, has the effect of decomposing $Si-CH_3$ group in the silicone eluted component, and can maintain the hydrophilicity of the surface of the coating film is formed, the product produced by the decomposition of the silicone eluted component is permeated and allowed to flow by water such as rainfall into the coating film rather than the surface of the coating film, whereby contaminants derived from the silicone eluted product become less likely to be deposited on the surface of the coating film for a long period of time. This technique is advantageous in that, by virtue of the porous structure, the deterioration and fixation of the silicone oil on the surface of the photocatalyst film can be reduced. Since, however, the pigment and the filler generally have a large particle diameter and a small specific surface area, the number of adsorption sites within pores are small and the internal permeability is excessively large. Accordingly, there is a disadvantageous possibility that the silicone eluted product is gradually deposited within the pores over time, eventually affecting the appearance and photocatalytic function. Further, in this technique, since the pigment and the filler are indispensable, a transparent photocatalyst film cannot be formed.

[Citation List]

[Patent Literature]

[PTL 1] JP H07(1995)-171408A
[PTL 2] JP 2008-272718A
[PTL 3] JP 2010-996044A
[PTL 4] JP 2009-255571A
[PTL 5] JP 2010-5613A
[PTL 6] JP 2001-62309A
[PTL 7] JP 2004-225449A

[SUMMARY OF THE INVENTION]

The present inventors have now found that, when a porous layer formed of a particulate material composed mainly of fine photocatalyst particles and fine inorganic oxide particles is adopted as a photocatalyst layer and, further, the thickness of the photocatalyst layer is brought to 0.3 $\mu$m to 3 $\mu$m, a composite material can be provided, including a transparent photocatalyst layer that can allow a design of a substrate to be utilized and, at the same time, can exert a photocatalytic decomposition function while effectively suppressing a silicone contamination-derived appearance change over a long period of time.

Accordingly, an object of the present invention is to provide use of a composite material including a transparent photocatalyst layer that can allow a design of a substrate to be utilized and, at the same time, can exert a photocatalytic decomposition function while effectively suppressing a silicone contamination-derived appearance change over a long period of time.

According to the present invention, there is provided use of a combination of a composite material comprising a photocatalyst layer with a silicone sealing material, for exerting a photocatalytic decomposition function while reducing or preventing silicone contamination on the surface of the photocatalyst layer in outdoors, wherein

the composite material comprises at least a substrate and a photocatalyst layer provided on the substrate,

the photocatalyst layer comprises at least photocatalyst particles and inorganic oxide particles where the total mass of the photocatalyst particles and the inorganic oxide particles is 80% by mass (exclusive) to 100% by mass (inclusive) when the mass of the whole photocatalyst layer is presumed to be 100% by mass,

the number mean particle diameter of a particulate component constituting the photocatalyst layer is less than 90 nm as calculated by measuring the length of any 100 particles present in a field of view under a scanning electron microscope at a magnification of 200000 times,

the photocatalyst layer is transparent and has a thickness of not more than 3 $\mu$m, and

the photocatalyst is excited by sunlight to decompose substances.

According to one another aspect of the present invention, there is provided a composite material that comprises a photocatalyst layer and is used together with a silicone sealing material in outdoors and exerts a photocatalytic decomposition function while reducing or preventing silicone contamination on the surface of the photocatalyst layer, wherein

the composite material comprises at least a substrate and a photocatalyst layer provided on the substrate,

the photocatalyst layer comprises at least photocatalyst particles and inorganic oxide particles where the total mass of the photocatalyst particles and the inorganic oxide particles is 80% by mass (exclusive) to 100% by mass (inclusive) when the mass of the whole photocatalyst layer is presumed to be 100% by mass,

the number mean particle diameter of a particulate component constituting the photocatalyst layer is less than 90 nm as calculated by measuring the length of any 100 particles present in a field of view under a scanning electron microscope at a magnification of 200000 times,

the photocatalyst layer is transparent and has a thickness of not more than 3 $\mu$m,

silicone contamination on the surface of the photocatalyst layer is reduced or prevented, and

the photocatalyst is excited by sunlight to decompose substances.

According to a further aspect of the present invention, there is provided a method for exerting a photocatalytic decomposition function of a composite material comprising a photocatalyst layer while reducing or preventing silicone contamination of the composite material, the method comprising:

placing the composite material comprising the photocatalyst layer together with a silicone sealing material in outdoors; and

exposing the photocatalyst layer to sunlight, wherein
the composite material comprises at least a substrate and a photocatalyst layer provided on the substrate,
the photocatalyst layer comprises at least photocatalyst particles and inorganic oxide particles where the total mass of the photocatalyst particles and the inorganic oxide particles is 80% by mass (exclusive) to 100% by mass (inclusive) when the mass of the whole photocatalyst layer is presumed to be 100% by mass,
the number mean particle diameter of a particulate component constituting the photocatalyst layer is less than 90 nm as calculated by measuring the length of any 100 particles present in a field of view under a scanning electron microscope at a magnification of 200000 times,
the photocatalyst layer is transparent and has a thickness of not more than 3 $\mu$m,
silicone contamination on the surface of the photocatalyst layer is reduced or prevented, and
the photocatalyst is excited by sunlight to decompose substances.

According to the present invention, while providing a transparent photocatalyst layer that can allow a design of a substrate to be utilized, a decomposition function possessed by a photocatalyst can be exerted while a silicone contamination-derived appearance change is suppressed for a long period of time. Further, in a preferred embodiment of the present invention, a high weathering resistance of the composite material can be realized.

[DESCRIPTION OF EMBODIMENTS]

In the composite material according to the present invention, the photocatalyst layer is exposed in outdoors to sunlight. The photocatalyst is excited by the sunlight, and substances are decomposed by the photoexcited photocatalyst. The function of decomposing harmful gases is exerted simultaneously with the function of decomposing contaminants other than the silicone contaminants while effectively suppressing the silicone contamination-derived appearance change.

In the present invention, the composite material comprising the photocatalyst layer is used in combination with a silicone sealing material. In the silicone sealing material, low-molecule compounds are eluted with the elapse of time. When the composite material is in contact with or present near the low-molecule compounds, the low-molecule compounds disadvantageously cover the surface of the composite material and, further, contaminants in the air are deposited on the composite material, leading to a possibility that the appearance of the outer wall surface is significantly contaminated. In the present invention, however, while providing a transparent photocatalyst layer that can allow a design of a substrate to be utilized, surprisingly, the silicone contamination-derived appearance change is effectively suppressed for a long period of time and, at the same time, photocatalytic decomposition functions such as the function of decomposing harmful gases and the function of decomposing contaminants other than silicone contaminants on the surface of the photocatalyst can be simultaneously exerted.

Although the reason why the unexpected effect of the photocatalyst-coated body according to the present invention can be attained has not been elucidated, it is believed to be as follows. However, it should be noted that the following description is hypothetical and the present invention is not limited thereby.

In the present invention, the photocatalyst layer is a porous layer formed of a particulate material that is composed mainly of fine photocatalyst particles and fine inorganic oxide particles and has a number mean particle diameter of less than 90 nm as calculated by measuring the length of any 100 particles present in a field of view under a scanning electron microscope at a magnification of 200000 times. By virtue of this constitution, particles within pores have a large specific surface area and are effectively adsorbed on the photocatalyst layer. Further, since pores are formed by the fine photocatalyst particles and the inorganic oxide particles, the pores become fine. Within the fine pores, siloxanes are hard to be bonded each other to grow to siloxane. Thus, a phenomenon that the siloxane bond inhibits the photocatalytic action is less likely to occur. Further, a porous structure having fine pores is formed. Even when siloxane is grown within the pores to such a level that causes the hindrance, since the specific surface area of the particles within the pores is large, the grown siloxane can come to close to other photocatalyst surfaces. Therefore, organic material sites such as a methyl group are decomposed and thus are less likely to be deposited. Consequently, the surface of the photocatalyst layer is maintained in a near-clean state for a long period of time, and, further, contaminants other than silicone contaminants on the photocatalyst surface can be decomposed. At the same time, since gaps among the particles are satisfactorily ensured, a structure that allows harmful gases such as NOx and SOx to be easily diffused into the photocatalyst layer through the gaps is realized. As a result, the harmful gases are efficiently brought into contact with the photocatalyst particles and are decomposed by the photocatalytic activity.

Silicone sealing materials, the contamination by which is reduced or prevented in the present invention, include any of materials having a possibility of silicone contamination, such as acetic acid-type, oxime-type, aminoxy-type and alcohol-type silicone sealing materials. The silicone sealing materials have a basic structure having a siloxane bond (-Si-O-Si-) in a main chain thereof and having a silanol group as a functional group at the polymer end and allow a condensation to proceed while utilizing moisture in the air.

Substrate

In the present invention, the substrate may be formed of various materials regardless of whether the materials are inorganic or organic materials as long as the photocatalyst layer can be formed thereon. The shape of the substrate is not also particularly limited.

Examples of substrates that are preferred from the viewpoint of materials include metals, ceramics, glasses, resins, rubbers, stones, cements, concretes, fibers, woven fabrics, woods, papers, combinations thereof, laminates thereof, and these materials with at least one coating layer formed thereon.

Examples of substrates that are preferred from the viewpoint of applications include building materials, exterior of buildings, window frames, window glass, structural members, exterior and coating of vehicles, exterior of mechanical devices or articles, dust covers and coating, traffic signs, various display devices, advertising pillars, sound insulation walls for roads, sound insulation walls for railways, bridges, exterior and coating of guard rails, interior and coating of tunnels, insulators, solar battery covers, heat collection covers for solar water heaters, PVC greenhouses, covers for vehicle illuminating lamps, outdoor lighting equipment, tables, and exterior materials for application onto the surface of the above articles, for example, films, sheets, and seals.

Photocatalyst layer in composite material

The photocatalyst layer in the composite material contains photocatalyst particles and inorganic oxide particles as indispensable components where the total mass of the photocatalyst particles and the inorganic oxide particles is 80% by mass (exclusive) to 100% by mass (inclusive), more preferably 90% by mass to 100% by mass, when the mass of the whole photocatalyst layer is presumed to be 100% by mass; and the number mean particle diameter of the particulate component constituting the photocatalyst layer is less than 90 nm, preferably not more than 50 nm, as calculated by measuring the length of any 100 particles present in a field of view under a scanning electron microscope at a magnification of 200000 times. Further, the photocatalyst layer is transparent and has a thickness of not more than 3 $\mu$m, preferably 0.3 $\mu$m to 3 $\mu$m.

The photocatalyst particles used in the present invention are not particularly limited as long as the particles are photocatalytically active. Preferred examples thereof include particles of metal oxides such as titanium oxide ($TiO_2$) ZnO, $SnO_2$, $SrTiO_3$, $WO_3$, $Bi_2O_3$, and $Fe_2O_3$. Titanium oxide particles are more preferred, and anatase titanium oxide particles are most preferred. Further, titanium oxide is advantageous in that bandgap energy is high and, accordingly, ultraviolet light is necessary for photoexcitation and visible light is not absorbed in the photoexcitation process, whereby color development of a complementary color component can be avoided. Titanium oxide is available in various forms such as powdery, sol, and solution forms. However, any form of titanium oxide that is photocatalytically active is usable.

In a preferred embodiment of the present invention, the mean particle diameter of the photocatalyst particles is preferably 10 nm to 100 nm, more preferably 10 nm to 60 nm. The mean particle diameter is calculated as a number mean value obtained by measuring the length of any 100 particles present in a field of view under a scanning electron microscope at a magnification of 200000 times. The particles are preferably spherical but may be substantially circular or elliptical. When the particles are substantially circular or elliptical, the approximate length of the particles is calculated as ((major axis + minor axis)/2).

The inorganic oxide particles used in the present invention are not particularly limited as long as the inorganic oxide particles, together with the photocatalyst particles, can form a layer. Preferred examples thereof include particles of single oxides such as silica, alumina, zirconia, ceria, yttria, boronia, magnesia, calcia, ferrite, amorphous form of titania, and hafnia; and particles of composite oxides such as barium titanate and calcium silicate. Silica particles are more preferred.

In a preferred embodiment of the present invention, the mean particle diameter of the inorganic oxide particles is preferably 5 nm to 50 nm, more preferably 10 nm to 40 nm. The mean particle diameter is calculated as a number mean value obtained by measuring the length of any 100 particles present in a field of view under a scanning electron microscope at a magnification of 200000 times. The particles are preferably spherical but may be substantially circular or elliptical. When the particles are substantially circular or elliptical, the approximate length of the particles is calculated as ((major axis + minor axis)/2).

In a preferred embodiment of the present invention, when the photocatalyst layer contains as an optional component at least one material selected from the group consisting of silicone emulsions, modified silicone emulsions, fluoro resin emulsions, silicone resins, modified silicone resins, hydrolyzates/condensates of alkyl silicates, alkali silicates, and hydrolyzates/condensates of metal alkoxides, the content of this material is less than 20% by mass, preferably not more than 10% by mass.

These materials functions as a binder that contributes to improve the strength of the photocatalyst layer. In some cases, however, the presence of these materials affects the reduction or prevention of silicone contamination, the development of photocatalytic activity, and the formation of gaps that are advantageous in the decomposition of harmful gases.

Accordingly, in the present invention, the photocatalyst layer may contain as an optional component the binder only in such an amount that the photocatalyst layer can ensure the capability of decomposing harmful gases, but, preferably, the binder is refrained from being added or is added only in a small amount. In some cases, preferably, the photocatalyst layer does not contain the binder at all. That is, the content of the binder component is 0% by mass (inclusive) to 10.0% by mass (exclusive), preferably 0% by mass to 5.0% by mass, when the amount of the whole photocatalyst layer is presumed to be 100% by mass.

In a preferred embodiment of the present invention, the content of the photocatalyst in the photocatalyst layer is more than 1% by mass, more preferably 1% by mass (exclusive) to 5% by mass (exclusive). The content of the inorganic oxide particles in the photocatalyst layer is 85% by mass (inclusive) to 99% by mass (exclusive). A photocatalyst content of more than 1% by mass can realize simultaneous development of photocatalytic decomposition functions such as the function of decomposing harmful gases and the function of decomposing contaminants other than silicone contaminants on the surface of the photocatalyst while effectively suppressing the silicone contamination-derived appearance change. When the content of the photocatalyst is small and less than 5% by mass and, at the same time, the content of the inorganic oxide particles is 85% by mass (inclusive) to 99% by mass (exclusive), it is considered that direct contact between the photocatalyst and the substrate can be suppressed and, further, satisfactory gaps can be ensured, whereby the decomposition or erosion of the substrate can be effectively suppressed.

When the content of the photocatalyst is 1% by mass (exclusive) to 5% by mass (exclusive) and, at the same time, the content of the inorganic oxide particles is 85% by mass (inclusive) to 99% by mass (exclusive), the decomposition or erosion of the substrate can be effectively suppressed even when a construction is adopted in which the surface of the substrate contains an organic material and the photocatalyst layer is provided on the surface.

Further, in the present invention, at least one metal or compound of metal selected from the group consisting of vanadium, iron, cobalt, nickel, palladium, zinc, ruthenium, rhodium, copper, silver, platinum, and gold may be added in the photocatalyst layer. The addition of the metal or the metal compound can realize the development of higher levels of antimicrobial and antifungicidal properties. Preferably, the presence of the metal or the metal compound does not affect the formation of gaps among the particles, that is, the photocatalyst particles and the inorganic oxide particles. Accordingly, the addition amount may be very small, and the amount of the metal or the metal compound necessary for the development of the action thereof is very small. Specifically, the addition amount of the metal or the metal compound is preferably approximately 0.01 to 10% by mass, more preferably 0.05 to 5% by mass, based on the photocatalyst. Suitable metal compounds include, for example, gluconate, sulfate, malate, lactate, sulfate, nitrate, formate, acetate, and chelate of the above metals. When the metal species is copper, cuprous oxide and cupric oxide are also utilizable.

In the present invention, the photocatalyst layer may further contain an ultraviolet shielding agent and an organic fungicidal agent in addition to the photocatalyst particles, the inorganic oxide particles, and a binder as an optional component. Preferably, the additives such as ultraviolet shielding agent and the organic fungicidal agent are not used at all. When these additives are used, the addition amount is 0% by mass (inclusive) to 10% by mass (exclusive), preferably 0% by mass (inclusive) to 5% by mass (inclusive). Desirably, the presence of these additives does not affect the formation of gaps among particles, that is, the photocatalyst particles and the inorganic oxide particles.

In a preferred embodiment of the present invention, the void fraction of the photocatalyst layer is not less than 15% by volume. When the void fraction is in the above-defined range, a satisfactory amount of pores can be ensured. Accordingly, a large amount of the silicone eluted product can be permeated into the pores and, at the same time, harmful gases come into satisfactory contact with the photocatalyst particles and thus become likely to be decomposed. In a preferred embodiment of the present invention, the void fraction of the photocatalyst layer is not more than 50% by volume from the viewpoint of ensuring satisfactory abrasion resistance.

The void fraction is measured at 5 points or more (preferably 10 points or more) per sample with a reflection spectroscopic film thickness meter: FE-3000 manufactured by Otsuka Electronics Co., Ltd., and the mean value of the measured values is determined. The procedure of measuring the void fraction where a glass plate is used as the substrate and the components for the formation of the photocatalyst layer are $TiO_2$ and $SiO_2$ will be described.

Step1. Determination of refractive index of glass plate

1-1. The reflectance of glass plate at a wavelength of 230 to 800 nm is measured under the following conditions.

Measuring method: absolute reflectance
Lens: Refrec. 25X
Standard reflective plate: AI-S-13
Filter: not used
Slit: 0.2 mm $\times$ 2 mm
Sampling time: 1000 msec
Cumulated number: 9 times

Gain: normal

1-2. The reflectance of the glass plate at a wavelength of 230 to 800 nm is calculated from a Fresnel amplitude reflection coefficient at air/glass plate interface where constituent medium = air and glass plate, light incidence angle $\varphi$ = 0°, and light incident from air side is reflected from the glass, and n-Cauchy's dispersion formula [$n_m = C_{m1} + C_{m2}/\lambda^2 + C_{m3}/\lambda^4$ wherein $n_m$ represents the refractive index of glass plate; $\lambda$ represents wavelength; and $C_{m1}$, $C_{m2}$, and $C_{m3}$ each represent a constant]. In the n-Cauchy's dispersion formula, the initial values of the constants ($C_{m1}$, $C_{m2}$, and $C_{m3}$) are $C_{m1} = 1.5$, $C_{m2} = 0$, and $C_{m3} = 0$, respectively, the refractive index of air is 1, and the extinction coefficient of air is 0 (zero) (Mitsunobu Kohiyama, "Kogaku Hakumaku No Kiso Riron (Basic Theory of Optical Thin Film," pp. 1-70, (2003, Optronics Co., Ltd.)).

1-3. Measured reflectance (1-1) was compared with calculated reflectance (1-2) to determine $C_{m1}$, $C_{m2}$, and $C_{m3}$ that provided a minimum square residual sum. The upper limit of the square residuals sum was 0.02.

1-4. $C_{m1}$, $C_{m2}$, and $C_{m3}$ determined in 1-3 are substituted for the n-Cauchy's dispersion formula to determine the refractive index $n_m$ of the glass plate.

Step 2. Determination of void fraction of photocatalyst layer

2-1. The reflectance of photocatalyst layer at a wavelength of 230 to 800 nm is measured under the following conditions.

Measuring method: absolute reflectance
Lens: Refrec. 25X
Standard reflective plate: Al-S-13
Filter: not used
Slit: 0.2 mm $\times$ 2 mm
Sampling time: 1000 msec
Cumulated number: 9 times
Gain: normal

2-2. The reflectance of the photocatalyst layer at a wavelength of 230 to 800 nm is calculated from a Fresnel amplitude reflection coefficient at air/single-layer thin film interface where constituent medium = air, photocatalyst layer = single-layer thin film, and glass plate, light incidence angle $\varphi$ = 0°, and light that is incident from air side and is reflected from the single-layer thin film, and light that has been permeated into the single-layer thin film and reflected in a multiply repeated manner from the upper and lower surface of the single-layer thin film (air/single-layer thin film interface and single-layer thin film/glass plate interface) are summed, and a Bruggeman's approximation formula [$C_1\{(\varepsilon_1-\varepsilon)/(\varepsilon_1+2\varepsilon)\}+C_2\{(\varepsilon_2-\varepsilon)/(\varepsilon_2+2\varepsilon)\}+C_3\{(\varepsilon_3-\varepsilon)/(\varepsilon_3+2\varepsilon)\}=0, C_1+C_2+C_3=1$ wherein $\varepsilon$ represents a permittivity of the single-layer thin film; $\varepsilon_1$ represents the permittivity of $SiO_2$; $\varepsilon_2$ represents the permittivity of $TiO_2$; $\varepsilon_3$ represents the permittivity of air; $C_1$ represents the volume fraction of $SiO_2$; $C_2$ represents the volume fraction of $TiO_2$ and $C_3$ represents the volume fraction of air] (Mitsunobu Kohiyama, "Kogaku Hakumaku No Kiso Riron (Basic Theory of Optical Thin Film)," pp. 1-70, (2003, Optronics Co., Ltd.); and D. E. Aspnes, Thin Solid Films, 89, 249 (1982)). The initial values of $C_1$ (volume fraction of $SiO_2$), $C_2$ (volume fraction of $TiO_2$), and $C_3$ (volume fraction of air) are set so that the square residual sum is converged to the minimum value. Further, the refractive index of air is 1, and the extinction coefficient of air is 0 (zero). For $SiO_2$ and $TiO_2$ refractive indexes ($n_1$ and $n_2$) and the extinction coefficients ($k_1$ and $k_2$) are quoted from E.D. Palik, "Handbook of Optical Constants of Solids," (1998, Academic Press, San Diego).

2-3. Measured reflectance (2-1) was compared with calculated reflectance (2-2) while varying film thickness d and volume fractions $C_1$, $C_2$, and $C_3$ of $SiO_2$, $TiO_2$, and air, respectively, to determine $C_1$, $C_2$, and $C_3$ that provided a minimum square residual sum. $C_3$ when the square residual sum is less than 0.02 and minimum is adopted as void fraction. Other conditions are as follows.

Film thickness search method: optimization method
Search range (wavelength): 400 to 800 nm
Search range (film thickness): 0 to 2000 nm
Film thickness step: 10 nm

$C_3$ determined here is regarded as void fraction of the photocatalyst layer according to the present invention.

A linear transmittance of the photocatalyst layer at a wavelength of 550 nm of not less than 90%, preferably not less than 95%, is ensured as the degree of "transparency" in the present invention. When the linear transmittance is in the above-defined range, color and design of the underlying substrate can be rendered without being sacrificed.

Further, the provision of a coating on a highly transparent glass or plastic does not sacrifice the transparency.

<u>Method for manufacturing photocatalyst-coated body</u>

The composite material in the present invention may be manufactured by coating a coating liquid having at least one of a composition for constituting the photocatalyst layer or a composition of a precursor for constituting the photocatalyst layer on a substrate. Coating methods usable herein include commonly extensively used methods, for example, brush coating, roller coating, spray coating, roll coater coating, flow coater coating, dip coating, flow coating, and screen printing. After coating of the coating liquid onto the substrate, the coated substrate may be dried at room temperature, or alternatively may if necessary be heat-dried. Since, however, there is a possibility that, when the coating is heated to such an extent that sintering proceeds, the amount of gaps among the particles is reduced and, consequently, satisfactory photocatalytic activity cannot be provided, it is preferred to select heating temperature and heating time that do not affect the formation of gaps at all or do not significantly affect the formation of gaps. For example, the drying temperature is 10°C to 500°C. When a resin is contained in at least part of the substrate, the drying temperature is preferably, for example, 10°C to 200°C when the heat resistant temperature of the resin and the like are taken into consideration.

[EXAMPLES]

The present invention is further illustrated by Examples that are not intended as a limitation of the invention.

Example 1

A photocatalyst coating liquid was first provided. A photocatalyst coating liquid was obtained by mixing an anatase $TiO_2$ water dispersion (number mean particle diameter: 42 nm, basic) and a water dispersed colloidal silica (number mean particle diameter: 5 nm, basic) into water as a solvent so that the mass ratio of the solid content of $TiO_2$ to the solid content of the colloidal silica was 3.00 : 97.00 and the solid content was 55% by mass..
The photocatalyst coating liquid was spray-coated on a flat glass plate having a size of 50 mm $\times$ 100 mm, and the coated plate was dried at 80°C for 30min. Thus, a photocatalyst layer was formed to obtain a photocatalyst-coated body. The photocatalyst-coated body had a layer thickness of 0.36 $\mu$m.

Example 2

A photocatalyst-coated body was prepared in the same manner as in Example 1, except that a water-dispersed colloidal silica (number mean particle diameter: 10 nm, basic) was used as the colloidal silica. In the photocatalyst-coated body thus obtained, the layer thickness was regulated to 0.36 $\mu$m.

Example 3

A photocatalyst-coated body was prepared in the same manner as in Example 1, except that a water-dispersed colloidal silica (number mean particle diameter: 15 nm, basic) was used as the colloidal silica. In the photocatalyst-coated body thus obtained, the layer thickness was regulated to 0.36 $\mu$m.

Example 4.

A photocatalyst-coated body was prepared in the same manner as in Example 1, except that a water-dispersed colloidal silica (number mean particle diameter: 25 nm, basic) was used as the colloidal silica. In the photocatalyst-coated body thus obtained, the layer thickness was regulated to 0.36 $\mu$m.

Example 5

A photocatalyst-coated body was prepared in the same manner as in Example 1, except that a water-dispersed colloidal silica (number mean particle diameter: 50 nm, basic) was used as the colloidal silica. In the photocatalyst-coated body thus obtained, the layer thickness was regulated to 0.36 $\mu$m.

Comparative Example 1

A photocatalyst-coated body was prepared in the same manner as in Example 1, except that a water-dispersed colloidal silica (number mean particle diameter: 90 nm, basic) was used as the colloidal silica. In the photocatalyst-coated body thus obtained, the layer thickness was regulated to 0.36 $\mu$m.

Evaluation experiment A: Anti-silicone contamination evaluation A

The samples of Examples 1 to 5 and Comparative Example 1 were hydrophilized to about 0° in terms of contact angle with water by irradiation with light emitted from a bactericidal lamp. Thereafter, the samples were immersed in silicone water and were then taken out therefrom. Excess liquid was allowed to flow down, and the surface of the specimen was dried with a drier. The contact angle of the coating for each specimen was measured. The above procedure was repeated to determine the number of times of immersion required until the contact angle with water reached 70°. The results were as shown in Table 1.

[Table 1]

| Sample | Ratio of coating film particles (% by mass) | Mean diameter of particles constituting coating film (nm) | Number of times of immersion required until contact angle reached 70° |
|---|---|---|---|
| Example 1 | 100 | 6.1 | 685 |
| Example 2 | 100 | 11 | 558 |
| Example 3 | 100 | 16 | 321 |
| Example 4 | 100 | 26 | 142 |
| Example 5 | 100 | 51 | 141 |
| Comparative Example 1 | 100 | 91 | 40 |

Example 6

A photocatalyst-coated body was prepared in the same manner as in Example 3, except that the layer thickness of the photocatalyst-coated body was changed to 0.44 $\mu$m.

Example 7

A photocatalyst-coated body was prepared in the same manner as in Example 3, except that the layer thickness of the photocatalyst-coated body was changed to 0.55 $\mu$m.

Example 8

A photocatalyst-coated body was prepared in the same manner as in Example 3, except that the layer thickness of the photocatalyst-coated body was changed to 0.74 $\mu$m.

Example 9

A photocatalyst-coated body was prepared in the same manner as in Example 3, except that the layer thickness of the photocatalyst-coated body was changed to 0.84 $\mu$m.

Example 10

A photocatalyst-coated body was prepared in the same manner as in Example 3, except that the layer thickness of the photocatalyst-coated body was changed to 1.1 $\mu$m.

Evaluation experiment

The samples of Example 3 and Examples 6 to 10 were subjected to the evaluation experiment A (evaluation of anti-silicone contamination). The results are shown in Table 2.

[Table 2]

| Sample | Ratio of coating film particles (% by mass) | Layer thickness (μm) | Number of times of immersion required until contact angle reached 70° |
|---|---|---|---|
| Example 3 | 100 | 0.36 | 288 |
| Example 6 | 100 | 0.44 | 338 |
| Example 7 | 100 | 0.55 | 440 |
| Example 8 | 100 | 0.74 | 565 |
| Example 9 | 100 | 0.84 | 724 |
| Example 10 | 100 | 1.1 | 933 |

Example 11

A photocatalyst-coated body was prepared in the same manner as in Example 7, except that the mass ratio of the solid content of $TiO_2$ to the solid content of the colloidal silica was 1.00 : 99.00.

Example 12

A photocatalyst-coated body was prepared in the same manner as in Example 7, except that the mass ratio of the solid content of $TiO_2$ to the solid content of the colloidal silica was 5.00 : 95.00.

Example 13

A photocatalyst-coated body was prepared in the same manner as in Example 7, except that the mass ratio of the solid content of $TiO_2$ to the solid content of the colloidal silica was 10.00 : 90.00.

Evaluation experiment

The samples of Example 7 and Examples 11 to 13 were subjected to the evaluation experiment A (evaluation of anti-silicone contamination). The results are shown in Table 3.
[Table 3]

| Sample | Ratio of coating film particles (% by mass) | Content of $TiO_2$ (% by mass) | Mean diameter of particles constituting coating film (nm) | Number of times of immersion required until contact angle reached 70° |
|---|---|---|---|---|
| Example 7 | 100 | 3 | 16 | 443 |
| Example 11 | 100 | 1 | 15 | 451 |
| Example 12 | 100 | 5 | 16 | 445 |
| Example 13 | 100 | 10 | 18 | 440 |

Example 14

A photocatalyst coating liquid was provided as follows. A photocatalyst coating liquid was obtained by mixing an anatase $TiO_2$ water dispersion (number mean particle diameter: 42 nm, basic), a water-dispersed colloidal silica (number mean particle diameter: 5 nm, basic), and a polycondensate of tetramethoxysilane into water as a solvent so that the mass ratio of the solid content of $TiO_2$ to the solid content of the colloidal silica to the solid content of the polycondensate of tetramethoxysilane was 10.00 : 80.00 : 10.00 and the solid content of the mixture was 5.5% by mass.
The photocatalyst coating liquid was spray-coated on a flat glass plate having a size of 50 mm × 100 mm, and the coated plate was dried at 80°C for 30min. Thus, a photocatalyst layer was formed to obtain a photocatalyst-coated body. The photocatalyst-coated body had a layer thickness of 0.55 μm.

Example 15

A photocatalyst-coated body was prepared in the same manner as in Example 14, except that the mass ratio of the solid content of $TiO_2$ to the solid content of the colloidal silica to the solid content of the polycondensate of tetramethoxysilane was 10.00 : 85.00 : 5.00.

Evaluation experiment B: Anti-silicone contamination evaluation B

The periphery of the photocatalyst-coated bodies of Examples 7, 14, and 15 fixed with a silicone sealant, and the photocatalyst-coated bodies were then fixed toward the south face of a building at Chigasaki-shi, Kanagawa Prefecture, followed by outdoor exposure. Every one month, the appearance of the photocatalyst-coated bodies was visually confirmed. As a result, any change in appearance was not observed for all the samples.

Example 16.

A photocatalyst-coated body was prepared in the same manner as in Example 4, except that the layer thickness of the photocatalyst-coated body was 0.55 μm.

Example 17

A photocatalyst-coated body was prepared in the same manner as in Example 14, except that the mass ratio of the solid content of $TiO_2$ to the solid content of the colloidal silica was 1.00 : 99.00.

Example 18

A photocatalyst-coated body was prepared in the same manner as in Example 14, except that the mass ratio of the solid content of $TiO_2$ to the solid content of the colloidal silica was 5.00 : 95.00.

Example 19

A photocatalyst-coated body was prepared in the same manner as in Example 14, except that the mass ratio of the solid content of $TiO_2$ to the solid content of the colloidal silica was 10.00 : 90.00.

Evaluation experiment C: Gas decomposition evaluation

The samples of Examples 15 to 19 were subjected to a gas decomposition test. The samples of Examples 14 to 17 were pretreated by exposure to BLB light at 1 mW/cm² for not less than 12 hr. One sheet of the sample was set within a reaction vessel described in JIS (Japanese Industrial Standards) R 1701-1. A NO gas was mixed into air regulated to 25°C and 50% RH to a concentration of 1000 ppb, and the NO gas-mixed air was introduced into the light-shielded reaction vessel for 20 min. Thereafter, the samples were irradiated with BLB light regulated to 3 mW/cm² for 20 min in such a state that the gas was introduced in the reaction vessel. In such a state that the gas had been introduced into the reaction vessel, the reaction vessel was again light-shielded. The amount of NOx removed was calculated from the NO and $NO_2$ concentrations before and after BLB light irradiation according to the following equation.

$$\text{Removed amount of NOx} = [\text{NO (after irradiation)} - \text{NO (at irradiation)}] - [NO_2 \text{ (at irradiation)} - NO_2 \text{ (after irradiation)}]$$

The results were as shown in Table 4. All of the results were good.
[Table 4]

| Sample | Ratio of coating film particles (% by mass) | Content of $TiO_2$ (% by mass) | Mean diameter of particles constituting coating film (nm) | Removed amount of NOx |
|---|---|---|---|---|
| Example 15 | 95 | 10 | 28 | 440 |
| Example 16 | 100 | 3 | 26 | 238 |
| Example 17 | 100 | 1 | 25 | 145 |
| Example 18 | 100 | 5 | 26 | 378 |
| Example 19 | 100 | 10 | 28 | 459 |

Example 20

A photocatalyst-coated body was prepared in the same manner as in Example 3, except that the layer thickness of the photocatalyst-coated body was 1.5 μm.

Example 21

A photocatalyst-coated body was prepared in the same manner as in Example 3, except that the layer thickness of the photocatalyst-coated body was 3.0 μm.

Evaluation experiment D: Transparency evaluation

For the samples of Examples 3, 6 to 10, 18, and 19, a transparency evaluation test was carried out by measuring a linear transmittance of light with a wavelength of 550 nm. The linear transmittance was evaluated according to the following evaluation criteria.

<Linear transmittance>

a: Linear (550 nm) transmittance of not less than 97%
b: Linear (550 nm) transmittance of 95% (inclusive) to 97% (exclusive)
c: Linear (550 nm) transmittance of less than 95%

The results were as shown in Table 5. For all the samples, the results were good.
[Table 5]

| Sample | Ratio of coating film particles (% by mass) | Layer thickness (μm) | Linear transmittance |
|---|---|---|---|
| Example 3 | 100 | 0.36 | a |
| Example 6 | 100 | 0.44 | a |
| Example 7 | 100 | 0.55 | a |
| Example 8 | 100 | 0.74 | a |
| Example 9 | 100 | 0.84 | a |
| Example 10 | 100 | 1.1 | a |
| Example 18 | 100 | 1.5 | a |
| Example 19 | 100 | 3.0 | b |

**Claims**

1. Use of a combination of a composite material comprising a photocatalyst layer with a silicone sealing material, for exerting a photocatalytic decomposition function while reducing or preventing silicone contamination on the surface of the photocatalyst layer in outdoors, wherein

the composite material comprises a substrate and a photocatalyst layer provided on the substrate,
the photocatalyst layer comprises photocatalyst particles and inorganic oxide particles where the total mass of the photocatalyst particles and the inorganic oxide particles is 80% by mass (exclusive) to 100% by mass (inclusive) when the mass of the whole photocatalyst layer is presumed to be 100% by mass,
the number mean particle diameter of the particulate component constituting the photocatalyst layer is less than 90 nm as calculated by measuring the length of any 100 particles present in a field of view under a scanning electron microscope at a magnification of 200000 times,
the photocatalyst layer is transparent and has a thickness of not more than 3 $\mu$m, and
the photocatalyst is excited by sunlight to decompose substances.

2. The use according to claim 1, wherein the substances decomposed by the photocatalyst are harmful gases.

3. The use according to claim 1, wherein the substances decomposed by the photocatalyst are contaminants other than silicone contaminants.

4. The use according to any one of claims 1 to 3, wherein the photocatalyst layer has a thickness of not less than 0.3 $\mu$m.

5. The use according to any one of claims 1 to 4, wherein the photocatalyst layer contains as an optional component less than 20% by mass of at least one material selected from the group consisting of silicone emulsions, modified silicone emulsions, fluoro resin emulsions, silicone resins, modified silicone resins, hydrolyzates/condensates of alkyl silicates, alkali silicates, and hydrolyzates/condensates of metal alkoxides.

6. The use according to claim 5, wherein the content of the optional component is not more than 10% by mass.

7. The use according to any one of claims 1 to 6, wherein
the photocatalyst particles have a number mean particle diameter of 10 nm to 100 nm as calculated by measuring the length of any 100 particles present in a field of view under a scanning electron microscope at a magnification of 200000 times, and
the inorganic oxide particles have a number mean particle diameter of 5 nm to 50 nm as calculated by measuring the length of any 100 particles present in a field of view under a scanning electron microscope at a magnification of 200000 times.

8. The use according to any one of claims 1 to 7, wherein the photocatalyst layer has a void fraction of not less than 15% by volume.

9. The use according to any one of claims 1 to 8, wherein the photocatalyst layer has a void fraction of not more than 50% by volume.

10. The use according to any one of claims 1 to 9, wherein the content of the photocatalyst particles in the photocatalyst layer is more than 1% by mass.

11. The use according to any one of claims 1 to 10, wherein
the content of the photocatalyst in the photocatalyst layer is 1% by mass (exclusive) to 5% by mass (exclusive) and
the content of the inorganic oxide particles in the photocatalyst layer is 85% by mass (inclusive) to 99% by mass (exclusive).

12. The use according to claim 11, wherein the substrate has a surface containing an organic material and the photocatalyst layer is provided on the surface.

13. The use according to any one of claims 1 to 12, wherein the inorganic oxide particles are silica particles.

14. A composite material that comprises a photocatalyst layer and is used together with a silicone sealing material in outdoors and exerts a photocatalytic decomposition function while reducing or preventing silicone contamination on the surface of the photocatalyst layer, wherein

the composite material comprises at least a substrate and a photocatalyst layer provided on the substrate,

the photocatalyst layer comprises at least photocatalyst particles and inorganic oxide particles where the total mass of the photocatalyst particles and the inorganic oxide particles is 80% by mass (exclusive) to 100% by mass (inclusive) when the mass of the whole photocatalyst layer is presumed to be 100% by mass,

the number mean particle diameter of a particulate component constituting the photocatalyst layer is less than 90 nm as calculated by measuring the length of any 100 particles present in a field of view under a scanning electron microscope at a magnification of 200000 times,

the photocatalyst layer is transparent and has a thickness of not more than 3 $\mu$m,

silicone contamination on the surface of the photocatalyst layer is reduced or prevented, and

the photocatalyst is excited by sunlight to decompose substances.

15. A method for exerting a photocatalytic decomposition function of a composite material comprising a photocatalyst layer while reducing or preventing silicone contamination of the composite material, the method comprising:

placing the composite material comprising the photocatalyst layer together with a silicone sealing material in outdoors; and

exposing the photocatalyst layer to sunlight, wherein

the composite material comprises at least a substrate and a photocatalyst layer provided on the substrate,

the photocatalyst layer comprises at least photocatalyst particles and inorganic oxide particles where the total mass of the photocatalyst particles and the inorganic oxide particles is 80% by mass (exclusive) to 100% by mass (inclusive) when the mass of the whole photocatalyst layer is presumed to be 100% by mass,

the number mean particle diameter of a particulate component constituting the photocatalyst layer is less than 90 nm as calculated by measuring the length of any 100 particles present in a field of view under a scanning electron microscope at a magnification of 200000 times,

the photocatalyst layer is transparent and has a thickness of not more than 3 $\mu$m,

silicone contamination on the surface of the photocatalyst layer is reduced or prevented, and

the photocatalyst is excited by sunlight to decompose substances.

<table>
<tr><td colspan="2" align="center">INTERNATIONAL SEARCH REPORT</td><td>International application No.</td></tr>
<tr><td colspan="2"></td><td>PCT/JP2011/065937</td></tr>
</table>

**A. CLASSIFICATION OF SUBJECT MATTER**
*B01J35/02*(2006.01)i, *B01J31/38*(2006.01)i

According to International Patent Classification (IPC) or to both national classification and IPC

**B. FIELDS SEARCHED**

Minimum documentation searched (classification system followed by classification symbols)
B01J35/02, B01J31/38

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2006-21494 A (Asahi Glass Co., Ltd.), 26 January 2006 (26.01.2006), paragraphs [0001], [0010], [0011], [0038], [0039], [0044], [0065] (Family: none) | 1-15 |
| X | JP 2007-302527 A (Asahi Glass Co., Ltd.), 22 November 2007 (22.11.2007), paragraphs [0015], [0022], [0049], [0056], [0074], [0075] (Family: none) | 1-15 |
| Y | JP 2010-99645 A (TOTO Ltd.), 06 May 2010 (06.05.2010), claims 1 to 3, 10, 11, 14, 20; paragraphs [0001], [0018] & US 2009/0286673 A1 & US 2011/0082027 A1 | 1-15 |

[X] Further documents are listed in the continuation of Box C.  [ ] See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 October, 2011 (07.10.11) | 18 October, 2011 (18.10.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

| | **INTERNATIONAL SEARCH REPORT** | International application No. |
|---|---|---|
| | | PCT/JP2011/065937 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2001-64625 A  (Akira FUJISHIMA et al.), 13 March 2001 (13.03.2001), claim 2 (Family: none) | 1-15 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010165880 A
- JP H071995171408 B
- JP 2008 A
- JP 272718 A
- JP 2010996044 A
- JP 2009255571 A

- JP 2010005613 A
- JP 2001062309 A
- JP 2004225449 A
- JP H071995171408 A
- JP 2008272718 A

**Non-patent literature cited in the description**

- **MITSUNOBU KOHIYAMA.** Kogaku Hakumaku No Kiso Riron. Optronics Co., Ltd, 2003, 1-70
- **D. E. ASPNES.** *Thin Solid Films,* 1982, vol. 89, 249

- **E.D. PALIK.** Handbook of Optical Constants of Solids. Academic Press, 1998